# EUROPEAN PATENT APPLICATION

(11) **EP 3 384 974 A1**
(43) Date of publication of application: **10.10.2018**
(21) Application number: 18164931.0
(22) Date of filing: 29.03.2018
(51) Int. Cl.: B01D 53/50, B01D 53/56, B01D 53/60, B01D 53/64

(54) **METHOD FOR TREATING A GAS FLOW AND EMISSION CONTROL ARRANGEMENT**

(30) Priority: 04.04.2017 FI 20175311
(71) Applicant: Valmet Technologies Oy, 02150 Espoo (FI)
(72) Inventor: RAIKO, Mikko, 33720 Tampere (FI); CHENNA, Naveen, 33100 Tampere (FI); KUVAJA, Lari-Matti, 33480 Ylöjärvi (FI); VIIALA, Juhani, 36200 Kangasala (FI); HÄMÄLÄINEN, Risto, 33800 Tampere (FI)
(74) Representative: Berggren Oy, Turku

(57) **Abstract**

The present invention relates to a method and arrangement for treating a gas flow, which comprises nitrogen oxides. Ozone is brought into contact with the gas flow in an ozone treatment section, and nitrogen oxides and optionally other contaminants present in the gas flow react with ozone and form oxidation products. The gas flow from the ozone treatment section is directed to a first section of a wet scrubber, where the gas flow is brought into contact with a first aqueous reagent. The oxidation products in the gas flow react with the first aqueous reagent and are transferred from the gas flow into a first liquid phase. The gas flow from the first section is fed to a second section of the wet scrubber. A second aqueous reagent, which comprises at least one ozone depleter selected from anionic sulphur compounds and/or transition metal cations, is also fed to the second section of the wet scrubber and contacted with the gas flow, whereby ozone in the gas flow reacts with the at least one ozone depleter to form reaction products, which are transferred to a second liquid phase.

## Description

The invention relates to a method for treating a gas flow and to an emission control arrangement according to the preambles of the enclosed independent claims.

Nitrogen oxides, NOx, are one of the main groups of pollutants present in flue gases from combustion processes or the like. If NOx is released to the atmosphere, it may react with moisture and form nitric acid, which may lead to occurrence of acidic rain. Furthermore, NOx may react with volatile organic compounds in the atmosphere and form ozone. Increased ozone levels in the troposphere cause smog as well as adversary health effects in humans. For these reasons, most of the countries have regulations for permitted levels of NOx in flue or exhaust gases released from industrial processes.

A plurality of methods has been proposed for reducing the amount of NOx in flue or exhaust gases. For example, it is possible to use ozone for removal of NOx. Flue gases comprising NOx are allowed to react with ozone, whereby they form higher nitrogen oxides from nitrogen dioxide to nitrogen pentoxide. Higher nitrogen oxides are then transferred into liquid phase and removed from the process as dilute acid of HNO₃. The process uses typically excess ozone in order to guarantee effective, preferably complete or near-complete, NOx removal. A problem is that after the NOx removal the cleaned flue gas may contain unreacted ozone. If this ozone is released to the troposphere with the cleaned gas flow, it may cause similar problems as described above. Consequently, there is a constant need to improve existing NOx removal and emission control processes.

An object of the present invention is to minimise or even eliminate the disadvantages existing in the prior art.

An object of the invention is also to provide a method and arrangement with which the amount of ozone exiting from the NOx removal process is minimised.

Another object of the invention is to provide a method and arrangement for effective and cost competitive NOx removal.

A further object of the invention is to provide a method and arrangement for effective use of recovered chemical compounds as process reagents.

A yet further object of the invention is to provide a method and arrangement for NOx removal which is easy to adjust to meet the needs of various industrial processes.

These objects are attained with the invention having the characteristics presented below in the characterising parts of the independent claims. Some preferred embodiments of the invention are presented in the dependent claims. The features recited in the dependent claims are freely combinable with each other unless otherwise explicitly stated. Furthermore, all the embodiments disclosed in the application are applicable both to the method and arrangement unless otherwise explicitly stated.

A typical method according to the present invention for treating a gas flow, which comprises nitrogen oxides, comprises at least the steps of:
- bringing ozone into contact with the gas flow in an ozone treatment section, and allowing nitrogen oxides and optionally other contaminants present in the gas flow to react with ozone and to form oxidation products,
- directing the gas flow from the ozone treatment section into a first section of a wet scrubber, where the gas flow is brought into contact with a first aqueous reagent, whereby the oxidation products in the gas flow react with the first aqueous reagent and are transferred from the gas flow into a first liquid phase,
- feeding the gas flow from the first section to a second section of the wet scrubber, and
- feeding to the second section of the wet scrubber a second aqueous reagent, which comprises at least one ozone depleter selected from anionic sulphur compounds and/or transition metal cations, and contacting it with the gas flow,
whereby ozone in the gas flow reacts with the at least one ozone depleter to form reaction products, which are transferred to a second liquid phase.

A typical emission control arrangement for treating a gas flow, which comprises nitrogen oxides, comprises
- an ozone treatment section, where ozone is brought into contact with gas flow and where nitrogen oxides and optionally other contaminants present in the gas flow are reacted into oxidation products,
- a wet scrubber, which is arranged in connection with and after the ozone treatment section, and which scrubber comprises
   - a first section which has means for contacting oxidation products in the gas flow with a first aqueous reagent and transferring them from the gas flow into a first liquid phase, which is at least partially removed from the first section, and
   - a second section, to which the gas flow proceeds from the first section, and which has means for contacting a second aqueous reagent with the gas flow, whereby ozone in the gas flow is transferred into a second liquid phase.

Now it has been surprisingly found out that by feeding a second aqueous reagent, which comprises at least one ozone depleter selected from anionic sulphur compounds and/or transition metal cations, to the gas flow in the second section of the wet scrubber, it is possible to reduce or eliminate the amount of ozone in the gas flow exiting the wet scrubber. Ozone is consumed in a reaction with the ozone depleter and the formed reaction products are removed to the second liquid phase of the wet scrubber. It is unexpected that the unreacted ozone in the gas phase can be effectively removed, preferably by using chemical compounds already present in the process.

In the context of the present invention the term "ozone depleter" is understood as a chemical compound or substance that is capable to react with ozone, whereby the ozone depleter is oxidised and ozone is transformed into oxygen gas O₂. According to one preferable embodiment of the invention the ozone depleter is an anionic sulphur compound which is sulphite, sulphide or any mixture thereof. Alternatively, or in addition, the ozone depleter may be a transition metal cation preferably selected from group consisting of Hg, Fe, V, Cr, Co and Cu. These transition metal cations may originate from fly ash, dust and/or other solid particles that are absorbed and/or dissolved in the first liquid condensate of the wet scrubber. The second aqueous reagent may thus comprise at least one anionic sulphur compound or at least one transition metal cation or any mixture thereof.

The second aqueous reagent may have a pH in the range of 6 - 8, preferably 6.5 - 7.5. This pH provides optimal conditions for reaction between the ozone depleter and ozone. If necessary, the pH of the second aqueous reagent may be adjusted by addition of suitable acid or base, such as NH₄OH, Ca(OH)₂, CaCO₃, NaOH or KOH, preferably NH₄OH or NaOH. pH of the second aqueous reagent is controlled, preferably continuously, and in case the pH deviates outside the defined pH range it may be adjusted back to the defined range, e.g. by addition of strong acid or base.

According to one embodiment of the present invention the second aqueous reagent has a total concentration of anionic sulphur compound, such as sulphite and/or sulphide, at least 3 mg/l, preferably at least 50 mg/l, more preferably at least 100 mg/l, even more preferably at least 250 mg/l. The total concentration of anionic sulphur compound may typically be less than 10 000 mg/l.

In the present method ozone is brought into contact with the gas flow in an ozone treatment section for removal of NOx. The gas flow may be a flue gas or an exhaust gas from an industrial boiler, incinerator, gas turbine, iron or steel mill process, cement manufacture, petroleum refinery or nitric acid manufacture. The gas flow may be an exhaust gas from a marine engine or boiler. Preferably the gas flow is a flue gas from an industrial boiler or incinerator, more preferably pulp or paper mill recovery boiler. The gas flow typically comprises nitrogen oxides (NOx) and optionally sulphur oxides (SOx) and/or compounds of trace elements, such as transition metals.

In the ozone treatment section nitrogen oxides and optional other contaminants present in the gas flow are allowed to react with ozone and form oxidation products. For nitrogen oxides the reactions include the following, of which the reaction (1) is predominant:

NO + O₃ → NO₂ + O₂ (1)

NO₂ + O₃ → NO₃ + O₂ (2)

NO₂ + NO₂ → N₂O₄ (3)

NO₂ + NO₃ → N₂O₅ (4)

The ozone to NOx molar ratio in the ozone treatment section may be in the range from 0.3 to 3, preferably from 0.5 to 2.5. Preferably an excess of ozone is used in the ozone treatment section to enable a complete or near complete oxidation of nitrogen oxides and possible other contaminants.

The ozone treatment section may be formed as a duct and it may comprise, for example, an array of nozzles or the like, with which the ozone is introduced to the gas flow flowing through the duct. Preferably ozone is introduced to the gas flow in a plurality of locations in the ozone treatment section. The array of nozzles is arranged in the ozone treatment section in a manner that guarantees an effective mixing of the injected ozone with the gas flow, and thus the effective interaction between the ozone, nitrogen oxides and optional other contaminants. The array of nozzles may be grid of pipes which are provided with nozzles, or an injection baffle.

The temperature of the gas flow entering the ozone treatment zone may be around 200 °C or even higher. According to one embodiment of the invention the gas flow may be quenched or cooled in a pre-treatment section before it is brought into the ozone treatment section. The quenching or cooling may be performed by injecting cooling water into the gas flow or by bringing it into a contact with a heat exchanger. Quenching or cooling reduces the temperature of the gas flow to a lower level, typically below 150 °C. This is beneficial, as it reduces the risk of thermal decomposition of the ozone which is injected to the gas flow in the ozone treatment zone

From the ozone treatment section the gas flow, in which NOx is now predominantly in form of nitrogen dioxide and/or higher nitrogen oxides, is directed into a first section of a wet scrubber, where the gas flow is brought into contact with a first aqueous reagent. According to one embodiment of the invention the pH of the first aqueous reagent may be around neutral or the pH may be slightly acidic or slightly alkaline. For example, the first aqueous reagent may have a pH in the range of 5 - 8, preferably 6.5 - 8. The pH of the first aqueous reagent may be adjusted by using suitable acid, base or buffer, such as NH₄OH, Ca(OH)₂, CaCO₃, NaOH or KOH, preferably NH₄OH or NaOH.

According to one embodiment it is possible to contact the gas flow from the ozone treatment zone with water or a first aqueous reagent or their mixture before the entry of the gas flow to the wet scrubber. This increases the moisture content of the gas flow and brings the gas close to or to its dew point before the entry to the wet scrubber, which improves the scrubbing results as well as heat recovery achieved in the wet scrubber.

The oxidation products in the gas flow react with the first aqueous reagent. For example, reactions involving nitrogen oxides with a first aqueous reagent comprising NaOH include the following:

NaOH + NO + NO₂ → NaNO₂ + H₂O

2 NaOH + 2NO₂ → NaNO₂ + NaNO₃ + H₂O

The reaction products, i.e. nitrites and nitrates, are formed when nitrogen oxides come in contact with the first aqueous reagent. These reaction products are very soluble in the aqueous liquids. Therefore, nitrogen oxides are easily transferred from the gas flow into a first liquid phase by absorption. Formed nitrites may further react with the oxygen present in the gas phase and be converted to nitrates.

At the same time, optional sulphur oxides in the gas flow react with the first aqueous reagent and form mainly sodium sulphite, sodium bisulphite and sodium sulphate that are also transferred to the first liquid phase. Further, possible fly ash, dust and/or other solid particles are absorbed by the first liquid phase and partially dissolved into it. The gas flow is transferred from the first section of the wet scrubber to the second section of the wet scrubber. At this stage the gas flow is preferably almost or essentially free from nitrogen dioxides and higher oxides, e.g. nitrogen pentoxide, as well as from sulphur oxides, but it still may contain ozone.

The gas flow is then fed from the first section to a second section of the wet scrubber. As described above, the gas flow is contacted with a second aqueous reagent, which comprises at least one ozone depleter, in the second section of the wet scrubber.

According to one preferable embodiment of the invention a part of the removed first liquid phase is directed from the first section of the wet scrubber to the second section of the wet scrubber and forms at least a part of the second aqueous reagent. This means that a part of the first liquid phase from the first section may be circulated or directed to the second section to deplete unreacted ozone. In this manner it is possible to effectively use the formed sulphite and possible transition metal cations as active reagent in the process and to reduce the need for additional chemicals. This increases the cost efficiency of the emission control process and makes it more versatile. Often a small side-stream, separated from the first liquid phase, is directed to the second section for forming the second aqueous reagent. According to one embodiment of the invention 1 - 20 weight-%, preferably 2 - 15 weight-%, more preferably 5 - 10 weight-%, of the first liquid phase from the first section of the wet scrubber is directed to the second section of the wet scrubber.

If needed, the pH of the second aqueous reagent may be adjusted by feeding or mixing it with the first aqueous reagent. For example, when a small side-stream is separated from the first liquid phase removed from the first section of the wet scrubber and fed to the second section as the second aqueous reagent, the pH of this side-stream may be adjusted by using the first aqueous reagent.

According to one embodiment at least a part of the second aqueous reagent is formed from an additional reagent flow, which is fed from a separate reagent reservoir. In this case the second aqueous reagent may be formed of a mixture of the first liquid phase and the additional reagent flow from the separate reagent reservoir, or the second aqueous reagent may be fed solely from the separate reagent reservoir. By feeding at least a part of the second aqueous reagent from the separate reagent reservoir it is possible to guarantee that the concentration of ozone depleter is adequate for complete or near-complete depletion of ozone in the second section of the wet scrubber. Especially, if the concentration of anionic sulphur compounds in the first liquid phase is low, sulphide, bisulphite and/or sulphite containing reagent flow may be fed from the separate reagent reservoir and form at least a part of the second aqueous reagent. This can be used especially in pulp mills where sulphite and sulphide chemicals are readily available.

The arrangement may thus comprise means for directing a part of the first liquid phase from the first section to the second section, where it forms at least a part of the second aqueous reagent. Alternatively, or in addition, the arrangement may comprise a separate reagent reservoir, which is connected to the means for contacting the second aqueous reagent with the gas flow.

The ozone concentration in or after the second section of the wet scrubber may be measured and the amount of the second aqueous reagent fed to the second section may be adjusted on the basis of the measured ozone concentration. The ozone measurement may be performed continuously or at predetermined time intervals. For example, it is possible to measure the ozone concentration at or after the exit of the second section and adjust the amount of the first liquid phase, which is directed to the second section on the basis of the measured ozone concentration. Alternatively, the ozone concentration may be measured after the wet scrubber or at the latest at the stack. The arrangement may thus comprise an ozone measurement device for measuring ozone concentration in the gas flow, as well as control means for controlling the amount of the second aqueous reagent on the basis of the measured ozone concentration. Any suitable ozone measurement device or detector known as such may be used, located appropriately in or after the second section of the wet scrubber. According to one embodiment the ozone measurement may be done at the entry and/or at the exit of the second section of the wet scrubber.

The second section of the wet scrubber comprises preferably a heat exchanger, with which the heat energy of the gas flow may be recovered. This provides an overall improvement in the energy balance of the process.

Typically at least a part of the second liquid phase may be removed from the wet scrubber, either directly or through the first section of the wet scrubber.

The arrangement may also comprise a dry scrubber arranged before the ozone treatment section for treating the gas flow by removing sulphur compounds. If the gas flow comprises a significant amount of sulphur dioxide, it may be preferable to remove at least a part of the sulphur dioxide before the ozone treatment section. Otherwise ozone may be consumed by sulphur dioxide, which increases the amount of ozone needed for the emission control. Furthermore, when ozone reacts with sulphur dioxide, the reaction product is sulphur trioxide which can react further into sulphuric acid aerosol droplets. These aerosol droplets are hard to capture effectively in the wet scrubber and may thus be transported with the cleaned gas flow to the environment. Dry scrubber may also remove possible gaseous mercury. In general, installation of a dry scrubber before the ozone treatment zone provides yet enhanced emission control possibilities.

The arrangement may further comprise a wet electrostatic precipitator arranged after the wet scrubber for removing aerosol particles from the gas flow exiting the wet scrubber. Thus, it is possible to capture the possible droplets, such as sulphuric acid droplets possibly formed at the ozone treatment section, and effectively inhibit their release to the environment.

According to one embodiment of the invention the first liquid phase may also be used for production of ammonium salts of nitrate, nitrite, sulphate and/or sulphite which are suitable for use as fertilizers or components of fertilizers. A second part of the first liquid phase may be removed from the wet scrubber and brought into a contact with ammonia. The sulphates, sulphites, nitrates and nitrites react with ammonia and form corresponding ammonium salts. Alternatively, the first liquid reagent may contain an ammonium compound, e.g. NH₄OH, whereby the reaction between sulphates, bisulphites, sulphites, nitrates, nitrites and with ammonia occur already in the first section of the wet scrubber. The liquid phase comprising ammonium salts may be dried by using any suitable drying technique, e.g. steam or screw dryer. In this manner dry ammonium slats are obtained that can be used as a fertilizer or that can form a component in a fertilizer mixture.

The present invention provides a possibility for effective multi-pollution control, including control of NOx, SOx, mercury and dust. The invention is easy to install and can be easily retro-fitted in various existing emission control processes. Furthermore, the invention provides improved possibilities for variation, which makes it suitable for large variety of industrial processes.

The invention is presented more closely in the following schematical non-limiting figures, where
Figure 1 shows an embodiment of the arrangement according to the present invention, and
Figure 2 shows another embodiment of the arrangement according to the present invention.

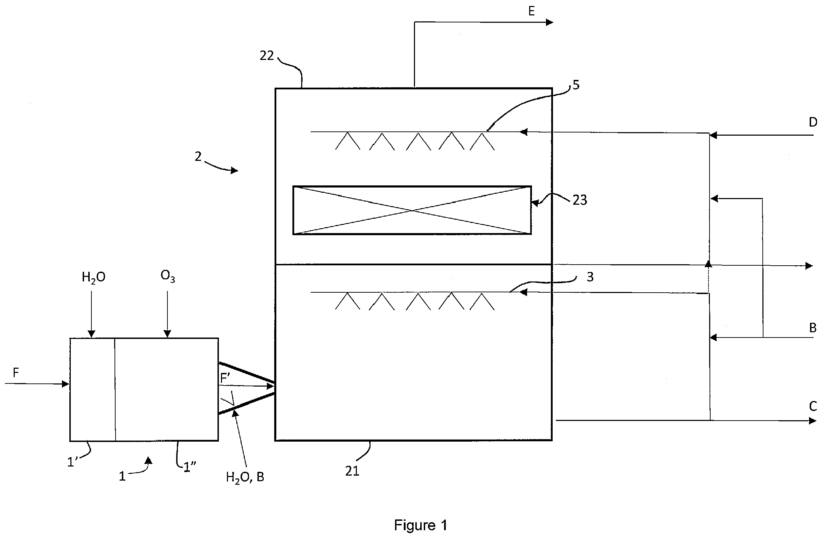

Figure 1 shows an embodiment of the arrangement according to the present invention. A flow of flue gas, denoted with F, enters an ozone treatment unit 1. Flue gas F comprises nitrogen oxides and optionally sulphur oxides as well as heavy metals and trace element compounds. The ozone treatment unit 1 comprises a pre-treatment section 1' and an ozone-treatment section 1". In the pre-treatment section 1' the gas flow is cooled by injecting cooling water into the gas flow. Alternatively, the pre-treatment zone 1' may comprise a heat exchanger for cooling the gas flow. From the pre-treatment section 1' the gas flow enters the ozone treatment section 1" where the ozone is brought into contact with the gas flow and where nitrogen oxides and optionally other contaminants present in the gas flow F react with ozone and form oxidation products.

From the ozone treatment section 1" of the ozone treatment unit 1 the gas flow F' is directed towards a first section 21 of a wet scrubber 2. The gas flow F', which comprises oxidation products and unreacted ozone may be contacted with water or a first aqueous reagent B or their mixture before the entry of the gas flow F" to the wet scrubber 2.

In the wet scrubber 2 first aqueous reagent B is introduced to the first section 21. The first aqueous reagent B is brought into the contact with the gas flow, for example by using spraying means 3. The oxidation products in the gas flow F', i.e. nitrogen oxides and optional sulphur oxides, react with the first aqueous reagent and are transferred from the gas flow into a first liquid phase. The first liquid phase is, at least partially removed from the first section 21. The removal flow from the first section 21 is denoted with arrow C.

From the first section 21 of the wet scrubber 2 the gas flow is fed to the second section 22 of the wet scrubber 2. To the second section 22 is also fed a second aqueous reagent D, for example by spraying means 5. The second aqueous reagent D comprises at least one ozone depleter selected from anionic sulphur compounds and/or transition metal cations. The second aqueous reagent D may be fed from a separate reagent reservoir (not shown). Preferably, a part of the first liquid phase removed from the first section 21 forms the second aqueous reagent D or a part of it. The second aqueous reagent D may be a mixture of the first liquid phase and the reagent flow from the separate reagent reservoir, or the second aqueous reagent may be formed solely of the first liquid phase or of the reagent flow from the separate reagent reservoir.

In case the pH of the second aqueous reagent is not at desired range, i.e. pH 6 - 8, it is possible to adjust the pH by feeding first aqueous reagent to any of the flows forming the second aqueous reagent before its entry to the second section 22 of the wet scrubber 2. This pH adjustment step is entirely optional, and may be performed only if needed.

In the second section 22 of the wet scrubber 2 the gas flow is thus contacted with the second aqueous reagent D, whereby ozone in the gas flow reacts with the at least one ozone depleter and is transformed into oxygen gas O₂. The ozone depleter is oxidised and transferred into a second liquid phase, which can be removed from the second section 22.

The second section 22 of the wet scrubber 2 comprises a heat exchanger 23, with which the heat energy may be recovered from the gas flow.

Gas flow E with low or non-existing concentration of ozone is removed from the wet scrubber 2.

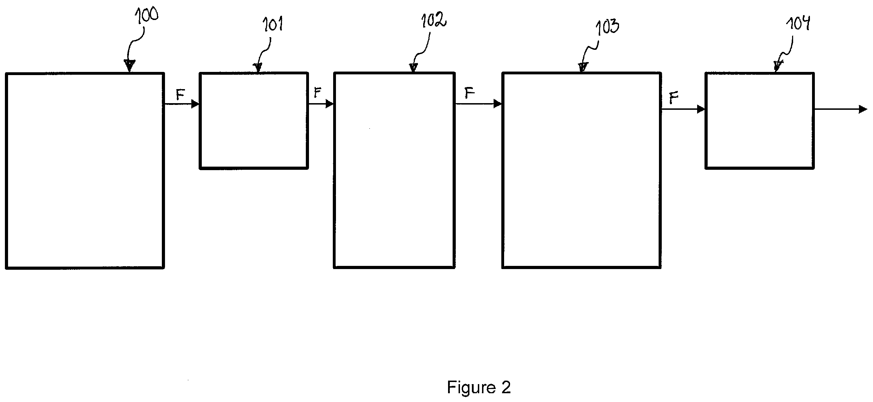

Figure 2 shows another embodiment of the arrangement according to the present invention. A gas flow F is removed from a boiler 100. The gas flow F is first directed to a dry scrubber 101 for removal of sulphur compounds from the gas flow F. From the dry scrubber 101 the gas flow F is directed to a filtering apparatus 102 for removal of dust and other solid particles. From the filtering apparatus 102 the gas flow F is directed to an arrangement 103 which corresponds to the arrangement depicted in Figure 1 and which comprises an ozone treatment section and a wet scrubber. From the arrangement 103 the gas flow F is directed to wet electrostatic precipitator 104 for removing aerosol particles from the gas flow exiting the apparatus 103.

It is apparent to a person skilled in the art that the invention is not limited exclusively to the examples described above, but that the invention can vary within the scope of the claims presented below.

## Claims

1. A method for treating a gas flow, which comprises nitrogen oxides, the method comprising at least the steps of:
- bringing ozone into contact with the gas flow in an ozone treatment section, and allowing nitrogen oxides and optionally other contaminants present in the gas flow to react with ozone and to form oxidation products,
- directing the gas flow from the ozone treatment section into a first section of a wet scrubber, where the gas flow is brought into contact with a first aqueous reagent, whereby the oxidation products in the gas flow react with the first aqueous reagent and are transferred from the gas flow into a first liquid phase,
- feeding the gas flow from the first section to a second section of the wet scrubber,
- feeding to the second section of the wet scrubber a second aqueous reagent, which comprises at least one ozone depleter selected from anionic sulphur compounds and/or transition metal cations, and contacting it with the gas flow, whereby ozone in the gas flow reacts with the at least one ozone depleter to form reaction products, which are transferred to a second liquid phase, and
- directing a part of the first liquid phase from the first section to form at least a part of the second aqueous reagent.

2. Method according to claim 1, **characterised in** forming at least a part of the second aqueous reagent from an additional reagent flow, which is fed from a separate reagent reservoir.

3. Method according to claim 1 or 2, **characterised in** directing 1 - 20 weight-%, preferably 2 - 15 weight-%, more preferably 5 - 10 weight-%, of the first liquid phase for forming the second reagent.

4. Method according to any of preceding claims 1 - 3, **characterised in that** the first aqueous reagent has a pH in the range of 5 - 8, preferably 6.5 - 8, and/or the second aqueous reagent has a pH in the range of 6 - 8, preferably 6.5 - 7.5.

5. Method according to any of preceding claims 1 - 4, **characterised in that** the ozone depleter is an anionic sulphur compound which is sulphite, sulphide or any mixture thereof.

6. Method according to claim 5, **characterised in that** the second aqueous reagent has a total concentration of anionic sulphur compound at least 3 mg/l, preferably at least 50 mg/l, more preferably at least 100 mg/l, even more preferably at least 250 mg/l.

7. Method according to any of preceding claims 1 - 6, **characterised in that** the ozone depleter is transition metal cation selected from group consisting of Hg, Fe, V, Cr, Co and Cu.

8. Method according to any of preceding claims 1 - 7, **characterised in** measuring the ozone concentration in or after the second section of the wet scrubber and controlling the amount of the second aqueous reagent on the basis of the measured ozone concentration.

9. Method according to any of preceding claims 1 - 8, **characterised in** quenching or cooling the gas flow before it is brought into the ozone treatment section.

10. Method according to any of preceding claims 1 - 9, **characterised in** treating the gas flow before the ozone treatment section in a dry scrubber for removal of sulphur compounds.

11. An emission control arrangement for treating a gas flow, which comprises nitrogen oxides, which arrangement comprises
- an ozone treatment section, where ozone is brought into contact with gas flow and where nitrogen oxides and optionally other contaminants present in the gas flow are reacted into oxidation products,
- a wet scrubber, which is arranged in connection with and after the ozone treatment section, and which scrubber comprises
- a first section, which has means for contacting oxidation products in the gas flow with a first aqueous reagent and transferring them from the gas flow into a first liquid phase which is at least partially removed from the first section, and
- a second section, to which the gas flow proceeds from the first section, and which has means for contacting a second aqueous reagent with the gas flow, whereby ozone in the gas flow is transferred into a second liquid phase, and
- means for directing a part of the first liquid phase from the first section to the second section and forming at least a part of the second aqueous reagent.

12. Arrangement according to claim 11, **characterised in that** it comprises a separate reagent reservoir, which is connected to the means for contacting the second aqueous reagent with the gas flow.

13. Arrangement according to claim 11 or 12, **characterised in that** the arrangement comprises an ozone measurement device for measuring ozone concentration in the gas flow, as well as control means for controlling the amount of the second aqueous reagent on the basis of the measured ozone concentration.

14. Arrangement according to claim 11, 12 or 13, **characterised in that** the arrangement comprises a pre-treatment section for quenching or cooling the gas flow, arranged before the ozone treatment section.

15. Arrangement according to any of preceding claims 11 - 14, **characterised in that** the arrangement comprises a dry scrubber arranged before the ozone treatment section for removal of sulphur compounds from the gas flow.
